# EUROPÄISCHE PATENTSCHRIFT

(11) **EP 3 284 650 B1**
(45) Veröffentlichungstag und Bekanntmachung des Hinweises auf die Patenterteilung: **02.09.2020**
(21) Anmeldenummer: 17185837.6
(22) Anmeldetag: 11.08.2017
(51) Int. Cl.: B62D 13/06, B60D 1/30, B62D 15/02, B60D 1/24, B60D 1/62

(54) **AUTOMATISIERTES EINPARKEN EINES KRAFTFAHRZEUGS MIT EINEM ANHÄNGER**
AUTOMATED PARKING OF A MOTOR VEHICLE WITH A TRAILER
MANEUVRE AUTOMATIQUE DE MISE EN STATIONNEMENT D'UN VÉHICULE AUTOMOBILE TRACTANT UNE REMORQUE

(30) Priorität: 16.08.2016 DE 102016115130
(43) Veröffentlichungstag der Anmeldung: 21.02.2018
(73) Patentinhaber: Valeo Schalter und Sensoren GmbH, 74321 Bietigheim-Bissingen (DE)
(72) Erfinder: Blinkle, Frank, 74321 Bietigheim-Bissingen (DE)
(74) Vertreter: Pothmann, Karsten

(56) Entgegenhaltungen:
- EP-A1- 2 551 132
- DE-A1-102013 015 349
- US-A1- 2016 114 831
- US-A1- 2016 129 939

## Beschreibung

Die Erfindung betrifft ein Verfahren für ein automatisiertes Einparken eines Kraftfahrzeugs mit einem Anhänger in eine Parklücke mithilfe einer Fahrerassistenzeinrichtung des Kraftfahrzeugs. Die Erfindung betrifft außerdem eine Fahrerassistenzeinrichtung für ein Kraftfahrzeug, welche für ein automatisiertes Einparken eines Kraftfahrzeugs mit einem Anhänger in eine Parklücke mithilfe der Fahrerassistenzeinrichtung ausgelegt ist.

Gerade im Bereich des Einparkens spielt das automatisierte Fahren, sei es teil-, hoch- oder vollautomatisiert, in zunehmendem Maße eine Rolle. Entsprechend gibt es auch eine Vielzahl von Fahrerassistenzsystemen oder Fahrerassistenzeinrichtungen für Kraftfahrzeuge, welche in Parksituationen einen Fahrer des Kraftfahrzeugs unterstützen und ihm in einem unterschiedlichen Grad beim Einparken behilflich sind.

So offenbart beispielsweise die DE 2011 109 491 A1 eine Fahrunterstützungsvorrichtung für ein Kraftfahrzeug zur Unterstützung bei der Befahrung enger Fahrwege. Dabei ist eine Datenerfassungseinheit zur Erfassung von Daten einer zurückzulegenden Wegstrecke aus Rad- und Lenkwinkelsensoren vorgesehen, sowie eine Speichereinheit zur Aufzeichnung der Wegstreckendaten und eine Ansteuereinheit zur Ansteuerung des Kraftfahrzeugs auf der Grundlage der aufgezeichneten Wegstreckendaten. Die Fahrunterstützungsvorrichtung dient dabei zum Abfahren der aufgezeichneten Wegstrecke in gleicher oder umgekehrter Richtung, was durch eine Kopplung mit einem Satellitennavigationsempfänger möglich ist.

Die DE 10 2015 114 87 A1 offenbart ein Parksystem, welches ein Fahrzeug während eines Parkmanövers unter Verwendung einer aktiven Parkhilfe oder einer Anhängerrückfahrhilfe steuert. Die Steuerung basiert dabei auf vorhergehenden Geschwindigkeitsprofilen an einem Ort, an welchem dasselbe Parkhilfesystem vorher aktiviert war.

Die DE 10 2010 023 162 A1 betrifft ein Verfahren zum Unterstützen eines Fahrers eines Kraftfahrzeugs beim Einparken in eine Parklücke, bei welchem in einem Lernmodus der Fahrerassistenzeinrichtung Referenzdaten über einen Umgebungsbereich und eine Referenzzielposition, welche im Lernmodus durch das Kraftfahrzeug erreicht wird, erfasst und abgespeichert werden. Diese Referenzdaten und Referenzzielposition werden dann in einem nachfolgenden, von dem Lernmodus unterschiedlichen Betriebsmodus der Fahrerassistenzeinrichtung für ein Unterstützen des Fahrers bei dem Einparken in dieselbe Parklücke genutzt.

Des Weiteren ist aus der DE 10 2014 013 219 A1 ein Assistenzsystem zum Rangieren eines Gespanns mit einem Zugfahrzeug und einem gelenkig an das Zugfahrzeug gekoppelten Anhänger bekannt, bei welchem das Assistenzsystem eine Mehrzahl von auswählbaren Fahrmanövern mit unterschiedlichen Trajektorien aufweist, entlang denen das Gespann mittels des Assistenzsystems bewegbar ist. Das Assistenzsystem stellt dabei einer bedienenden Person wenigstens eines der Fahrmanöver zur Auswahl bereit.

Die US 2016/114831 A1 ist als nächstliegender Stand der Technik nach den Ansprüchen 1 und 14 zu sehen und beschreibt ein weiteres Assistenzsystem für ein Kraftfahrzeug, welches für ein automatisiertes Einparken eines Kraftfahrzeugs mit einem Anhänger in eine Parklücke mit Hilfe der Fahrerassistenzeinrichtung ausgelegt ist, und dabei ausgelegt ist, bei einem
a) manuellen Einparken des Kraftfahrzeugs in die Parklücke durch einen Fahrer des Kraftfahrzeugs in einem aktivierten Lernmodus während des Einparkens
   a1) durch eine Sensoreinrichtung der Fahrerassistenzeinrichtung Referenzdaten über einen Umgebungsbereich der Parklücke zu erfassen und abzuspeichern und
   a2) eine Referenzzielposition, in welcher das Kraftfahrzeug in der Parklücke geparkt wird, zu erfassen und abzuspeichern;
   und wobei bei einem nachfolgenden
b) automatisierten Einparken des Kraftfahrzeugs mit dem angehängten Anhänger in diese Parklücke mit Hilfe der Fahrerassistenzeinrichtung in einem von dem Lernmodus verschiedenen Betriebsmodus die abgespeicherten Referenzdaten und die Referenzzielposition zu berücksichtigen.

Es stellt sich somit die Aufgabe, die Unterstützung eines Fahrers eines Kraftfahrzeugs bei einem Einparken mit einem Anhänger in eine Parklücke zu verbessern.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Verfahren und eine Fahrerassistenzeinrichtung gemäß den unabhängigen Ansprüchen. Es wird eine Verfahren für ein automatisiertes Einparken eines Kraftfahrzeugs mit einem Anhänger vorgeschlagen, der an das Kraftfahrzeug angehängt ist, in eine Parklücke mit Hilfe einer Fahrerassistenzeinrichtung des Kraftfahrzeugs, insbesondere also mittels oder durch die Fahrerassistenzeinrichtung. Das Verfahren umfasst dabei als einen ersten Verfahrensschritt ein manuelles, also durch einen Fahrer des Kraftfahrzeugs gesteuertes, Einparken des Kraftfahrzeugs in die Parklücke oder einen gewünschten Parkort, beispielsweise in eine Garage, durch den Fahrer des Kraftfahrzeugs bei einem aktivierten Lernmodus der Fahrerassistenzeinrichtung. Dem manuellen Einparken kann somit ein automatisches oder manuelles Aktivieren des Lernmodus der Fahrerassistenzeinrichtung vorausgehen.

In dem Lernmodus werden während des Einparkens durch eine Sensoreinrichtung der Fahrerassistenzeinrichtung Referenzdaten über einen Umgebungsbereich der Parklücke erfasst und abgespeichert. Die Referenzdaten können dabei insbesondere fortlaufend erfasst und abgespeichert werden. Die Referenzdaten umfassen insbesondere Positionsdaten einer Positionserfassungseinheit der Fahrerassistenzeinrichtung über eine Position des Kraftfahrzeugs und/oder Abstandsdaten, welche einen Abstand des Kraftfahrzeugs von einem oder mehreren Objekten in der Umgebung des Kraftfahrzeugs repräsentieren. Des Weiteren wird in dem Lernmodus während des Einparkens durch die Fahrerassistenzeinrichtung, insbesondere mittels einer Positionserfassungseinheit der Fahrerassistenzeinrichtung, eine Referenzzielposition, in welcher das Kraftfahrzeug in der Parklücke geparkt, also abgestellt, wird, erfasst und abgespeichert. Die Referenzzielposition kann dabei auch eine Orientierung des Kraftfahrzeugs an der Referenzzielposition in Form einer Referenzzielorientierung oder Zielorientierung umfassen.

Ein weiterer Schritt, welcher auf das manuelle Einparken folgt, ist ein automatisiertes Einparken des Kraftfahrzeugs mit dem angehängten Anhänger in diese Parklücke, deren Umgebungsbereich von den erfassten und abgespeicherten Referenzdaten der Sensoreinrichtung repräsentiert wird, mithilfe der Fahrerassistenzeinrichtung in einem von dem Lernmodus verschiedenen Betriebsmodus der Fahrerassistenzeinrichtung, bei welchem die abgespeicherten Referenzdaten und die Referenzzielposition berücksichtigt werden. Bei dem geschilderten Einparken kann es sich um ein sogenanntes Homezone-Parking in der Nähe eines Wohnortes oder eines Arbeitsplatzes oder an wiederkehrend von dem Fahrer angefahrenen Punkten handeln.

Das hat den Vorteil, dass somit das Kraftfahrzeug mit dem Anhänger, genauer gesagt der Anhänger durch das Kraftfahrzeug automatisiert, also beispielsweise zumindest teil-, hoch- oder vollautomatisiert eingeparkt werden kann und dabei das Kraftfahrzeug mit dem Anhänger oder der Anhänger über eine längere Strecke manövriert werden kann, also auch wenn beispielsweise die Referenzzielposition, in welche der Anhänger oder das Kraftfahrzeug mit dem angehängten Anhänger eingeparkt werden soll, außerhalb einer Sensorreichweite oder eines Erfassungsbereiches der Sensoreinrichtung der Fahrerassistenzeinrichtung liegt. Dabei muss der Fahrer nicht, insbesondere nicht ständig, in das System eingreifen und somit nicht, wie in anderen bekannten Systemen, einen Teil einer Regelung des Einparkens übernehmen. Damit ist das Einparken mit dem Anhänger in besonders vorteilhafter Weise vereinfacht.

In einer vorteilhaften Ausführungsform ist vorgesehen, dass bei dem automatisierten Einparken in dem Betriebsmodus Sensordaten über den Umgebungsbereich der Parklücke erfasst und mit den Referenzdaten verglichen werden. Insbesondere können die Sensordaten hier fortlaufend erfasst und mit den Referenzdaten verglichen werden. Des Weiteren ist hier vorgesehen, dass in dem Betriebsmodus durch das Vergleichen aus den erfassten Sensordaten in Abhängigkeit von zumindest einer vorgegebenen Abmessung des Anhängers eine aktuelle Position, welche insbesondere eine Orientierung des Kraftfahrzeugs mit dem angehängten Anhänger umfasst, also insbesondere eine Position und Orientierung sowohl des Kraftfahrzeugs als auch des Anhängers, relativ zu der Referenzzielposition bestimmt oder ermittelt wird. Bei der zumindest einen vorgegebenen Abmessung kann es sich allgemein um Anhängerdaten handeln. Insbesondere kann die zumindest eine vorgegebene Abmessung eine Länge und/oder eine Breite des Anhängers umfassen und/oder einen Anhängewinkel, in welchem der Anhänger zu dem Kraftfahrzeug steht. Der Anhängewinkel wird dabei durch den Winkel zwischen einer Längsachse des Kraftfahrzeugs und einer Längsachse des Anhängers bestimmt.

Des Weiteren ist hier vorgesehen, dass in dem Betriebsmodus abhängig von der aktuellen Position und der vorgegebenen Abmessung des Anhängers und/oder einer vorgegebenen Kinematik des Anhängers ein Fahrschlauch oder eine Trajektorie, welcher ein Fahrschlauch zuordenbar ist, für das automatisierte Einparken festgelegt wird. Der Fahrschlauch verbindet dabei die aktuelle Position des Kraftfahrzeugs mit der Referenzzielposition. Der Fahrschlauch kann auch eine vorgebbare Toleranzabweichung haben. Bei dem Einparken kann sich das Kraftfahrzeug mit dem Anhänger dann innerhalb des Fahrschlauchs von der aktuellen Position zu der Referenzzielposition bewegen. Es kann hier auch zumindest ein Fahrschlauch, also beispielsweise mehrere Fahrschläuche, festgelegt werden, welche die beiden Positionen verbinden. Insbesondere handelt es sich also bei dem Umgebungsbereich der Parklücke, über welchen Sensordaten erfasst werden, um einen Bereich zwischen der aktuellen Position und der Referenzzielposition, durch welchen ein Fahrschlauch oder mehrere Fahrschläuche legbar sind.

Bevorzugterweise wird sodann das Kraftfahrzeug mit dem Anhänger innerhalb des Fahrschlauchs in die Parklücke mit einer vorgebbaren Toleranzabweichung automatisiert eingeparkt. Bei dem Fahrschlauch kann es sich also um einen Fahrschlauch handeln, welcher ausgehend von einem für das Kraftfahrzeug alleine ausgelegten Fahrschlauch, welcher beispielsweise durch das manuelle Einparken vorgegeben wurde, an einen Fahrschlauch für das Kraftfahrzeug mit dem angehängten Anhänger erweitert oder angepasst wurde, wobei dabei die vorgegebenen Abmessungen des Anhängers und/oder die vorgegebene Kinematik berücksichtigt wurden. Der Fahrschlauch kann also insbesondere ein im Vergleich zu dem Fahrschlauch des Kraftfahrzeugs alleine breiterer Fahrschlauch sein und/oder ein Fahrschlauch, dessen minimaler Krümmungsradius größer ist als der minimale Krümmungsradius des Fahrschlauchs für das Kraftfahrzeug ohne Anhänger. Die vorgegebene Kinematik beschreibt dabei das Fahrverhalten des Anhängers bei einer Vor- und insbesondere auch einer Rückwärtsfahrt des Kraftfahrzeugs mit angehängtem Anhänger. Die Kinematik des Anhängers wird dabei zu großen Teilen von einem Abstand einer Radachse des Anhängers von einem Anhängepunkt des Anhängers an das Kraftfahrzeug bestimmt. Gerade das Fahrverhalten des Kraftfahrzeugs mit dem Anhänger in Kurven wird also durch die vorgegebene Kinematik repräsentiert. Die vorgegebene Kinematik kann auch Teil der oben genannten allgemeinen Anhängerdaten sein. Die Toleranzabweichung kann dabei beispielsweise in Form eines Mindest-Sicherheitsabstands zu zumindest einem Objekt, welches in dem Umgebungsbereich der Parklücke von der Sensoreinrichtung erfasst wird oder wurde und durch die Sensordaten repräsentiert ist, vorgegeben werden.

Das hat den Vorteil, dass auch in verwinkelten Umgebungen der Parklücke, beispielsweise wenn sich die Parklücke in der aktuellen Position außerhalb eines Erfassungsbereichs der Sensoreinrichtung befindet, ein automatisiertes Einparken realisiert werden kann. Dabei kann die vorgebbare Toleranzabweichung, beispielsweise in Form eines Toleranzwertes, auch individuell angepasst sein, um in unterschiedlich verwinkelten Umgebungen oder unterschiedlich komplexen Szenarien ein sicheres automatisiertes Einparken zu ermöglichen. Durch den Toleranzwert kann auch ein Komfort erhöht werden, da so beispielsweise ein Durchgang erhalten oder der Anhänger zugänglich bleibt. Dadurch, dass die Referenzdaten über den Umgebungsbereich mit den Sensordaten verglichen werden, kann eine ständige Korrektur des Fahrverhaltens des Kraftfahrzeugs durch die Fahrerassistenzeinrichtung erzielt werden, sodass sich das Kraftfahrzeug mit dem angehängten Anhänger stets innerhalb des Fahrschlauches mit der vorgegebenen Toleranzabweichung oder stets innerhalb des Fahrschlauches befindet.

Es kann hier auch vorgesehen sein, dass das Festlegen des einen Fahrschlauchs ein Evaluieren oder bewerten mehrerer möglicher Fahrschläuche sowie ein Verwerfen eines oder mehrerer möglicher von dem einen verschiedener Fahrschläuche umfasst. Es können auch sämtliche Fahrschläuche verworfen werden, wenn festgestellt wird, dass kein Fahrschlauch kollisionsfrei von der aktuellen Position zu der Referenzposition gelegt werden kann.

In einer besonders vorteilhaften Ausführungsform ist vorgesehen, dass bei dem manuellen Einparken das Kraftfahrzeug ohne den Anhänger eingeparkt wird. Das hat den Vorteil, dass das Erfassen und somit "Einlernen" der Umgebung in dem Lernmodus erleichtert wird, da der Fahrer manuell lediglich mit dem Kraftfahrzeug alleine einparken muss, was bekanntlich im Vergleich zu einem Einparken mit einem angehängten Anhänger wesentlich einfacher ist.

In einer alternativen Ausführungsform kann vorgesehen sein, dass bei dem manuellen Einparken das Kraftfahrzeug mit dem Anhänger eingeparkt wird. Insbesondere kann dabei das manuelle Einparken vorwärts, also in einer Vorwärtsfahrtrichtung des Kraftfahrzeugs, und das spätere automatisierte Einparken rückwärts erfolgen, also in einer Rückwärtsfahrtrichtung des Kraftfahrzeugs. Somit kann beispielsweise nach einem Aktivieren des Lernmodus' bei einem erstmaligen Einparken in die Parklücke und bereits bei einem nächsten späteren Einparken das Kraftfahrzeug mit dem Anhänger automatisiert eingeparkt werden. Gerade, wenn das manuelle Einparken hier in einer Vorwärtsrichtung des Kraftfahrzeugs erfolgt, ist das manuelle Einparken im Lernmodus für den Fahrer besonders einfach. Denn für weitere Einparkvorgänge kann dann infolge das automatisierte Einparken rückwärts erfolgen, was für den Fahrer die Vereinfachung mit sich bringt, dass entsprechend das Ausparken in einer Vorwärtsrichtung des Kraftfahrzeugs erfolgt. Außerdem kann so beispielsweise nach dem Einparken des Kraftfahrzeugs mit dem angehängten Anhänger durch ein Abhängen des Anhängers, dieser Anhänger so für eine künftige Verwendung zum direkten Anhängen und Nutzen bereitstehen.

In einer weiteren Ausführungsform ist vorgesehen, dass die zumindest eine vorgegebene Abmessung und/oder die vorgegebene Kinematik eine vorab in der Fahrerassistenzeinrichtung abgespeicherte Abmessung und/oder abgespeicherte Kinematik ist. Die Abmessung und/oder Kinematik kann insbesondere durch den Fahrer aus mehreren abgespeicherten Abmessungen und/oder Kinematiken ausgewählt werden. Beispielsweise kann dieses Auswählen durch eine Auswahl aus verschiedenen vorgegebenen Anhängern und/oder eine freie Eingabe von Abmessungen des Anhängers erfolgen. Das hat den Vorteil, dass auf einfache und übersichtliche Weise eine sehr genaue Abmessung oder Kinematik von der Fahrerassistenzeinrichtung genutzt werden kann. Damit kann auch die Trajektorie beziehungsweise der Fahrschlauch mit einer besonders großen Genauigkeit bestimmt werden, was wiederum eine erhöhte Betriebssicherheit nach sich zieht. Dies vereinfacht das Einparken für den Fahrer ebenfalls.

In einer weiteren Ausführungsform ist vorgesehen, dass die zumindest eine vorgegebene Abmessung und/oder die vorgegebene Kinematik während eines Fahrvorgangs des Kraftfahrzeugs mit dem Anhänger und/oder während des Einparkens des Kraftfahrzeugs mit dem Anhänger iterativ über ein Messen von unterschiedlichen Lenkwinkeleinschlägen des Kraftfahrzeugs und von jeweils zugehörigen Winkelveränderungen des Anhängewinkels des Anhängers, also von dem Winkel einer Längsachse des Anhängers relativ zu der Längsachse des Kraftfahrzeugs, bestimmt oder ermittelt wird. Die zumindest eine vorgegebene Abmessung und/oder vorgegebene Kinematik kann also in einer Folge von Vorwärts- und/oder Rückwärtsbewegungen in einer oder mehreren unterschiedlichen Kurven durch die Fahrerassistenzeinrichtung bestimmt werden. Alternativ oder ergänzend können auch weitere Verfahren zum Ermitteln oder Bestimmen der Abmessung oder der Kinematik zum Einsatz kommen, wie sie beispielsweise auch in der DE 10 2014 107 917 A1 offenbart sind. Das hat den Vorteil, dass der Fahrer ohne eine Kenntnis über die Abmessungen oder die Kinematik des Anhängers von dem beschriebenen Verfahren profitieren kann und dennoch der Fahrschlauch auf den jeweils angehängten Anhänger abgestimmt werden kann. Überdies wird so auch die Eingabe oder Auswahl des Fahrers als mögliche Fehlerquelle eliminiert und die Einfachheit und Zuverlässigkeit des Verfahrens erhöht.

In einer weiteren Ausführungsform ist vorgesehen, dass das manuelle Einparken mehrfach erfolgt und die jeweils erfassten Referenzdaten genutzt werden, um die bereits gespeicherten Referenzdaten zu erweitern und/oder zu überprüfen und/oder deren Genauigkeit zu erhöhen. Das hat den Vorteil, dass ein größerer Umgebungsbereich der Parklücke von den Referenzdaten repräsentiert wird oder aber die Repräsentation des bereits von den Referenzdaten repräsentierten Umgebungsbereiches verbessert wird. Außerdem können so auch eventuelle Änderungen in der Umgebung der Parklücke berücksichtigt werden. Beispielsweise können so auch in der Umgebung der Parklücke vorhandene Objekte mit unterschiedlichen Eigenschaften versehen werden, wenn sie beispielsweise wiederholt oder stets am gleichen Ort sind, oder aber bei den mehrfachen manuellen Einparkvorgängen ihre Position verändern können oder sogar auch verschwinden oder wieder auftauchen können. Diese Variabilität kann sodann auch bei dem Festlegen des Fahrschlauches berücksichtigt werden. Beispielsweise kann so der Fahrschlauch derart in den Umgebungsbereich gelegt werden, dass er nur durch Teilbereiche der Umgebung verläuft, in welchen noch nie, also bei keinem der manuellen Einparkvorgänge, Hindernisse erfasst wurden.

In einer anderen vorteilhaften Ausführungsform ist vorgesehen, dass in dem Betriebsmodus eine Warnung an den Fahrer ausgegeben wird, falls das Kraftfahrzeug mit dem Anhänger und/oder der Anhänger nicht in die Parklücke passt und/oder falls der Fahrschlauch nicht derart festgelegt werden kann, dass das Kraftfahrzeug mit dem Anhänger innerhalb des Fahrschlauchs oder innerhalb des Fahrschlauchs mit der vorgebbaren Toleranzabweichung automatisiert in die Parklücke eingeparkt werden kann. Die Warnung kann dabei insbesondere nach dem Bestimmen der aktuellen Position ausgegeben werden. Das hat den Vorteil, dass der Fahrer sofort weiß, ob aus der aktuellen Position des Kraftfahrzeugs ein wunschgemäßes automatisiertes Einparken möglich ist. Auch kann der Fahrer durch die Warnung angeregt werden, die aktuelle Position des Kraftfahrzeugs zu verändern, um das automatisierte Einparken zu ermöglichen.

In einer weiteren bevorzugten Ausführungsform ist vorgesehen, dass in dem Betriebsmodus der Fahrschlauch mit einem spitzwinkligen Knick, also als Fahrschlauch mit einem spitzwinkligen Knick festgelegt wird. Damit bedingt der Fahrschlauch bei dem Fahren mit dem Kraftfahrzeug nebst angehängtem Anhänger einen Fahrtrichtungswechsel des Kraftfahrzeugs und des Anhängers in einer Längsrichtung des Kraftfahrzeugs beziehungsweise des Anhängers. Es kann sich also bei dem Fahrschlauch mit dem spitzwinkligen Knick um einen Fahrschlauch handeln, wie er bei einem mehrzügigen Parken, beispielsweise einem zweizügigen Parken, mit dem Kraftfahrzeug befahren wird. Der Fahrschlauch mit dem spitzwinkligen Knick kann also ein Fahrschlauch für ein zumindest zweizügiges Einparken sein. Besonders vorteilhafterweise erfolgt dabei das manuelle Einparken im Lernmodus ohne einen Fahrtrichtungswechsel in eine Längsrichtung des Kraftfahrzeugs, also in einem Zug oder einzügig. Das hat den Vorteil, dass das manuelle Einparken mit einem Zug besonders einfach durch den Fahrer bewerkstelligt werden kann und das mehrzügige automatisierte Einparken eine große Flexibilität bezüglich des festgelegten Fahrschlauches erlaubt. Damit wird ermöglicht, dass aus einer aktuellen Position des Kraftfahrzeugs, aus welcher die Zielreferenzposition beispielsweise durch ein einzügiges Einparken mit dem angehängten Anhänger nicht erreichbar ist, dennoch ein automatisiertes Einparken realisiert werden kann.

In einer anderen Ausführungsform ist vorgesehen, dass im Betriebsmodus ein Hinweis an den Fahrer ausgegeben wird, falls der Fahrschlauch, insbesondere der Fahrschlauch mit dem spitzwinkligen Knick, durch einen weiteren Umgebungsbereich verläuft, über welchen keine oder nur unzureichende Referenzdaten erfasst und abgespeichert wurden. Bei dem weiteren Umgebungsbereich kann es sich also um einen Umgebungsbereich handeln, der an den oben genannten Umgebungsbereich der Parklücke angrenzt oder der mit dem Umgebungsbereich der Parklücke nur teilweise überlappt. Dabei kann insbesondere der Hinweis eine Aufforderung zum nochmaligen manuellen Einparken bei aktiviertem Lernmodus umfassen. Das hat den Vorteil, dass der Fahrer erfährt, dass grundsätzlich das automatisierte Einparken infrage kommt, jedoch keine ausreichenden Informationen vorhanden sind. Diesen Mangel an Information könnte der Fahrer so jedoch bei einem geeigneten erneuten manuellen Einparken mit aktiviertem Lernmodus korrigieren, sodass er künftig auf die Funktion des automatisierten Einparkens zurückgreifen kann. Da es sich bei der Parklücke um eine sehr häufig angefahrene Parklücke, beispielsweise eine Garage oder einen Parkplatz in der Nähe eines Wohnortes des Fahrers oder in der Nähe eines Arbeitsplatzes des Fahrers handeln kann, wird so auch in sinnvoller Weise das künftige Einparken für den Fahrer erleichtert.

In einer weiteren vorteilhaften Ausführungsform ist vorgesehen, dass der Anhänger eine weitere Sensoreinrichtung aufweist, welche mit der Fahrerassistenzeinrichtung des Kraftfahrzeugs gekoppelt wird oder ist und welche an die Fahrerassistenzeinrichtung im Lernmodus Referenzdaten und/oder im Betriebsmodus Sensordaten bereitstellt. Das hat den Vorteil, dass das Vergleichen der Referenz- und/oder Sensordaten jeweils bessere Ergebnisse liefert und etwaige Fehler, welche aus dem Bestimmen der Abmessungen oder vorgegebenen Abmessungen des Anhängers resultieren, minimiert werden.

In einer anderen vorteilhaften Ausführungsform ist vorgesehen, dass bei dem automatisierten Einparken die Fahrerassistenzeinrichtung selbsttätig eine Bewegung des Kraftfahrzeugs in einer Querrichtung des Kraftfahrzeugs steuert. Die Fahrerassistenzeinrichtung kann also selbsttätig eine Lenkeinrichtung oder Lenkung des Kraftfahrzeugs steuern. Das hat den Vorteil, dass die aufgrund einer Kinematik des angehängten Anhängers für eine menschliche Bedienperson oft schwierig kontrollierbare Steuerung des Kraftfahrzeugs mit angehängtem Anhänger in der Querrichtung dem Fahrer durch die Fahrerassistenzeinrichtung abgenommen wird, wodurch das Einparken erleichtert wird.

In einer weiteren vorteilhaften Ausführungsform ist vorgesehen, dass bei dem automatisierten Einparken die Fahrerassistenzeinrichtung selbsttätig eine Bewegung des Kraftfahrzeugs in einer Längsrichtung des Kraftfahrzeugs steuert. Insbesondere kann die Fahrerassistenzeinrichtung also ein Gasgeben und/oder ein Bremsen und/oder einen Gangwechsel wie beispielsweise ein Einlegen eines Vorwärts- und/oder Rückwärtsganges selbsttätig steuern. Dies ist gerade in Verbindung mit der Steuerung der Querrichtung, wie sie im letzten Absatz beschrieben ist, vorteilhaft. Durch eine Kombination der Steuerung der Bewegung des Kraftfahrzeugs in Längs- und Querrichtung des Kraftfahrzeugs durch die Fahrerassistenzeinrichtung kann so ein hoch- oder vollautomatisiertes Einparken realisiert werden. Dies ist für den Fahrer besonders angenehm und einfach.

Die Erfindung betrifft auch eine Fahrerassistenzeinrichtung für ein Kraftfahrzeug, welche für ein automatisiertes, also zumindest teilautomatisiertes, bevorzugt aber hoch- oder vollautomatisiertes, Einparken eines Kraftfahrzeugs mit einem Anhänger in eine Parklücke mithilfe der Fahrerassistenzeinrichtung ausgelegt ist. Die Fahrerassistenzeinrichtung ist dabei ausgelegt, bei einem manuellen Einparken des Kraftfahrzeugs in die Parklücke, welches durch einen Fahrer des Kraftfahrzeugs in oder bei einem aktivierten Lernmodus der Fahrerassistenzeinrichtung durchgeführt wird, während des Einparkens durch eine Sensoreinrichtung der Fahrerassistenzeinrichtung Referenzdaten über einen Umgebungsbereich der Parklücke zu erfassen und abzuspeichern und auch eine Referenzzielposition, in welcher das Kraftfahrzeug in der Parklücke geparkt wird, zu erfassen und abzuspeichern. Die Fahrerassistenzeinrichtung kann also eine Sensoreinrichtung zum Erfassen von Daten wie Referenz- und/oder Sensordaten über einen Umgebungsbereich des Kraftfahrzeugs und damit auch der Parklücke aufweisen. Die Fahrerassistenzeinrichtung kann auch ein Positionserfassungssystem zum Erfassen einer aktuellen Position des Kraftfahrzeugs aufweisen. Eine solche aktuelle Position kann dann an einem Zielort als eine Referenzzielposition durch die Fahrerassistenzeinrichtung abspeicherbar sein.

Die Fahrerassistenzeinrichtung ist auch ausgelegt, bei einem auf das manuelle Einparken folgenden automatisierten Einparken des Kraftfahrzeugs mit dem angehängten Anhänger in diese Parklücke mit Hilfe oder Unterstützung der Fahrerassistenzeinrichtung in einem von dem Lernmodus verschiedenen Betriebsmodus die abgespeicherten Referenzdaten und die Referenzzielposition zu berücksichtigen. Dafür kann die Fahrerassistenzeinrichtung auch eine Recheneinrichtung umfassen.

Vorteile und vorteilhafte Ausführungsform der Fahrerassistenzeinrichtung entsprechen hier Vorteilen und vorteilhaften Ausführungsformen des beschriebenen Verfahrens.

Die Erfindung betrifft auch ein Kraftfahrzeug mit einer solchen Fahrerassistenzeinrichtung.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert.

Dabei zeigen:
- Fig. 1: eine beispielhafte Ausführungsform einer Fahrerassistenzeinrichtung als Teil eines Kraftfahrzeugs;
- Fig. 2: ein beispielhaftes Szenario für ein manuelles Einparken, anhand dessen eine beispielhafte Ausführungsform eines Verfahrens für ein automatisiertes Einparken eines Kraftfahrzeugs mit einem Anhänger in eine Parklücke dargelegt wird, aus einer Vogelperspektive;
- Fig. 3: ein dem in Fig. 2 gezeigten Szenario entsprechendes beispielhaftes Szenario für ein automatisiertes Einparken des Kraftfahrzeugs mit dem angehängten Anhänger in die Parklücke mithilfe der Fahrerassistenzeinrichtung, aus der Vogelperspektive; und
- Fig. 4: ein weiteres dem in Fig. 2 gezeigten Szenario entsprechendes beispielhaftes Szenario für ein automatisiertes Einparken des Kraftfahrzeugs mit dem angehängten Anhänger in die Parklücke mithilfe der Fahrerassistenzeinrichtung, aus der Vogelperspektive.

In den Figuren werden gleiche oder funktionsgleiche Elemente mit den gleichen Bezugszeichen versehen.

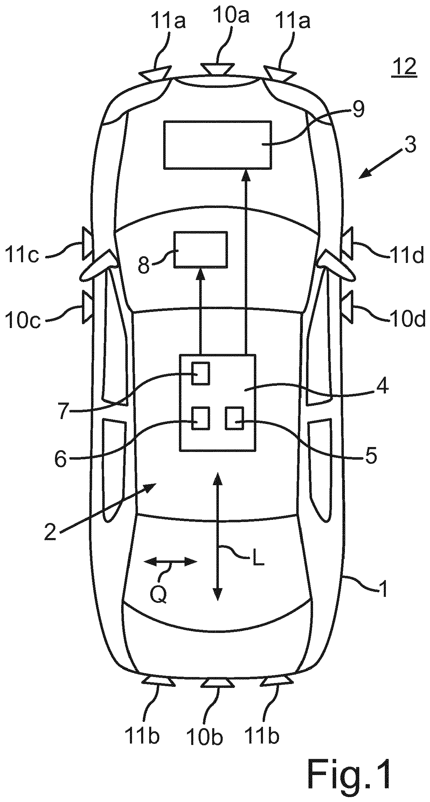

Fig. 1 zeigt ein Kraftfahrzeug, welches eine Fahrerassistenzeinrichtung aufweist, in einer schematischen Draufsicht aus einer Vogelperspektive. Die Fahrerassistenzeinrichtung 2 umfasst dabei eine Sensoreinrichtung 3 sowie vorliegend auch eine Steuereinrichtung 4. Die Steuereinrichtung 4 umfasst vorliegend eine Positionierungseinrichtung oder Positionierungseinheit 5, mit welcher eine Position des Kraftfahrzeugs 1 beispielsweise mit einem globalen Positionserfassungssystem erfasst und damit bestimmt werden kann. Die Steuereinrichtung 4 umfasst im gezeigten Beispiel auch eine Speichereinrichtung 6, mittels welcher Daten, beispielsweise Positionsdaten der Positionserfassungseinrichtung 5 und/oder Sensordaten der Sensoreinrichtung 3, als Referenzdaten und/oder Referenzzielposition speicherbar sind. Im gezeigten Beispiel umfasst die Steuereinrichtung 4 auch eine Ausgabeeinheit 7, mittels welcher sich Warnungen und/oder Hinweise an einen Fahrer des Kraftfahrzeugs 1 ausgeben lassen. Die Steuereinrichtung 4 und damit die Fahrerassistenzeinrichtung 2 ist im gezeigten Beispiel zum Steuern einer Bewegung des Kraftfahrzeugs 1 in einer Querrichtung Q des Kraftfahrzeugs 1 mit einer Lenkeinrichtung oder Lenkung 8 des Kraftfahrzeugs 1 gekoppelt. Außerdem ist vorliegend die Steuereinrichtung 4 und somit die Fahrerassistenzeinrichtung 2 mit einer Motor- und/oder Getriebesteuerung 9 des Kraftfahrzeugs 1 gekoppelt, um selbstständig eine Bewegung des Kraftfahrzeugs 1 in einer Längsrichtung L des Kraftfahrzeugs 1 zu steuern.

Die Sensoreinrichtung 3 umfasst im gezeigten Beispiel zumindest eine Kamera 10a, 10b, 10c, 10d, nämlich vorliegen eine Frontkamera 10a, eine Heckkamera 10b, eine erste seitliche Kamera 10c und eine zweite seitliche Kamera 10d. Außerdem umfasst im gezeigten Beispiel die Sensoreinrichtung 3 auch eine Reihe von Abstandssensoren 11a, 11b, 11c, 11d, welche beispielsweise als Ultraschallsensoren ausgeführt sein können. Die Abstandssensoren 11a sind dabei vorliegend an einer Fahrzeugfront angeordnet, die Abstandssensoren 11b an einem Fahrzeugheck und die weiteren Abstandssensoren 11c und 11d an einer rechten beziehungsweise linken Fahrzeugseite. Alternativ oder ergänzend kann die Sensoreinrichtung 3 auch eine 360-Grad-Kamera und/oder einen Laserscanner und/oder einen Radar umfassen.

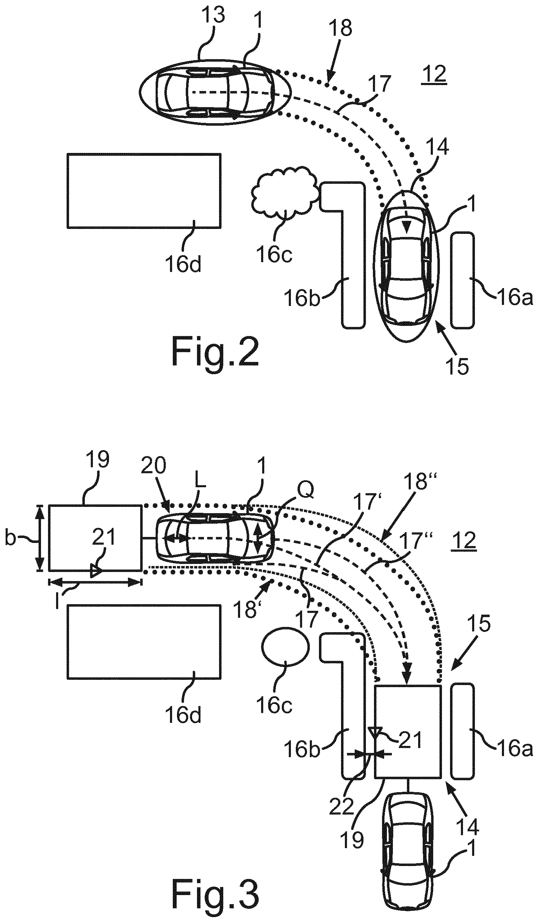

Die Fahrerassistenzeinrichtung 2 ist vorliegend in einem Lernmodus sowie in einem von dem Lernmodus verschiedenen Betriebsmodus betreibbar. In dem Lernmodus ist die Fahrerassistenzeinrichtung 2 ausgelegt, bei einem manuellen Einparken des Kraftfahrzeugs 1 in eine Parklücke 15 (Fig. 2) durch einen Fahrer des Kraftfahrzeugs 1 durch die Sensoreinrichtung 3 Referenzdaten über einen Umgebungsbereich 12 des Kraftfahrzeugs 1 und damit der Parklücke 15 zu erfassen und vorliegend in der Speichereinrichtung 6 abzuspeichern. Selbiges gilt auch für das Erfassen einer Referenzzielposition 14 (Fig. 2), in welcher das Kraftfahrzeug 1 in der Parklücke 15 geparkt wird, und welche durch die Positionserfassungseinrichtung 5 erfasst sowie hier ebenfalls in der Speichereinrichtung 6 abgespeichert wird.

Somit ist die dargestellte Fahrerassistenzeinrichtung 2 in dem Betriebsmodus dazu in der Lage und dazu ausgelegt, das Kraftfahrzeug 1 mit einem angehängten Anhänger 19 in die Parklücke automatisiert einzuparken. Dies erfolgt unter Berücksichtigung der abgespeicherten Referenzdaten über die Umgebung 12 und die abgespeicherte Referenzzielposition 14 von dem manuellen Einparken. Das automatisierte Einparken kann im gezeigten Beispiel durch die Steuerung der Lenkeinrichtung 8 und die Motor-und/oder Getriebesteuerung 9 durch die Steuereinrichtung hoch- oder vollautomatisiert erfolgen, also ohne einen Regeleingriff des Fahrers des Kraftfahrzeugs 1. Dadurch wird das Einparken gerade mit einem Anhänger 19 für einen Fahrer erleichtert. Genauere Ausführungsformen des Verfahrens sind in den folgenden Figuren dargestellt.

Fig. 2 zeigt ein beispielhaftes Szenario für ein manuelles Einparken, anhand dessen eine beispielhafte Ausführungsform eines Verfahrens für ein automatisiertes Einparken des Kraftfahrzeugs mit einem Anhänger in eine Parklücke dargelegt wird, aus einer Vogelperspektive. Das Kraftfahrzeug 1 ist vorliegend in einer Startposition 13 und in einer Referenzzielposition 14 dargestellt. Die Referenzzielposition 14 ist dabei in einer Parklücke 15, welche vorliegend in Gestalt einer Garage vorhanden ist, angeordnet. Die Parklücke 15 weist somit in diesem Beispiel zwei Seitenwände auf, welche als Objekte 16a, 16b Hindernisse in der Umgebung der Parklücke 15 darstellen. Vorliegend sind noch zwei weitere Objekte 16d, 16c, ein Baum und ein weiteres Gebäude, dargestellt.

Die Startposition 13 ist vorliegend durch eine als gestrichelter Pfeil dargestellte Trajektorie 17 mit der Referenzzielposition 14 verbunden. Das heißt, dass im gezeigten Beispiel das Kraftfahrzeug 1 entlang der Trajektorie 17 und damit innerhalb des Fahrschlauchs 18, welcher der Trajektorie 17 zugeordnet ist, zunächst manuell in die Parklücke 15 eingeparkt wird. Bei dem manuellen Einparken befindet sich die Fahrerassistenzeinrichtung 2 (Fig. 1) in dem Lernmodus, sodass durch die Sensoreinrichtung 3 (Fig. 1) Referenzdaten über den Umgebungsbereich 12 des Kraftfahrzeugs 1 und damit der Parklücke 15 und erfasst und abgespeichert werden. Durch die Fahrerassistenzeinrichtung 2 wird auch die Referenzzielposition 14, in welcher das Kraftfahrzeug 1 in die Parklücke 15 geparkt wird, erfasst und abgespeichert.

Damit können bei einem automatisierten Einparken des Kraftfahrzeugs 1 mit dem angehängten Anhänger 19 in die Parklücke 15 mithilfe der Fahrerassistenzeinrichtung 2 die in dem Lernmodus erfassten und abgespeicherten Referenzdaten sowie die erfasste und abgespeicherte Referenzzielposition 14 berücksichtigt werden.

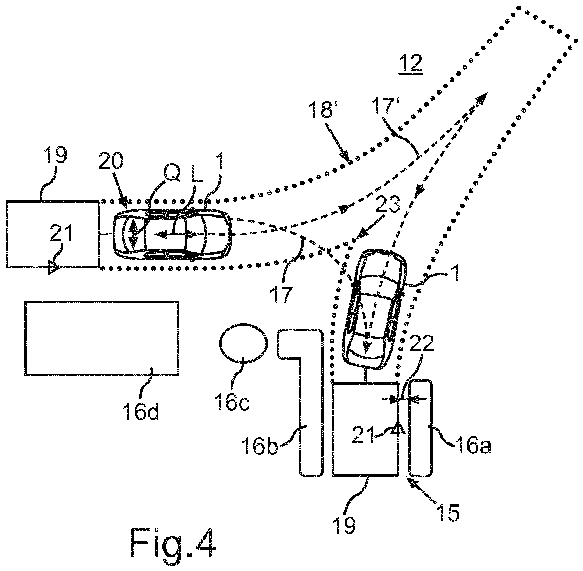

Zwei beispielhafte Ausführungsformen eines solchen automatisierten Einparkens werden in den Figs. 3 und 4 dargestellt.

Fig. 3 zeigt ein dem in Fig. 2 gezeigten Szenario entsprechendes beispielhaftes Szenario für ein automatisiertes Einparken des Kraftfahrzeugs mit dem angehängten Anhänger in die Parklücke mithilfe der Fahrerassistenzeinrichtung. Dargestellt ist hier das Kraftfahrzeug 1 mit einem angehängten Anhänger 19 in einer aktuellen Position 20. Ebenfalls dargestellt ist das Kraftfahrzeug 1 mit dem angehängten Anhänger 19 in der Referenzzielposition 14. Die Objekte 16a, 16b, 16c, 16d sind ebenfalls, teilweise vereinfacht, dargestellt. Auch in Fig. 3 eingezeichnet ist die Trajektorie 17 aus Fig. 2, um das Verfahren anschaulicher zu erläutern.

Vorliegend ist auch eine erste weitere Trajektorie 17', welche die aktuelle Position 20 mit der Referenzzielposition 14 verbindet, eingezeichnet sowie ein entsprechender erster weiterer Fahrschlauch 18' und eine zweite weitere Trajektorie 17", welche die aktuelle Position 20 mit der Referenzzielposition 14 verbindet, nebst einem zugehörigen zweiten weiteren Fahrschlauch 18".

Für das automatisierte Einparken wird nun die Fahrerassistenzeinrichtung 2 (Fig. 1) in den Betriebsmodus, welcher sich von dem Lernmodus unterscheidet, versetzt und entsprechend durch die Sensoreinrichtung 3 (Fig. 1) Sensordaten über den Umgebungsbereich 12 des Kraftfahrzeugs 1 und damit vorliegend auch der Parklücke 15 erfasst und mit den aus dem manuellen Einparken bekannten und abgespeicherten Referenzdaten verglichen. Durch das Vergleichen wird nun aus den erfassten Sensordaten in Abhängigkeit, also unter Berücksichtigung von zumindest einer vorgegebenen Abmessung I, b, vorliegend beispielsweise zweier je als eine Länge beziehungsweise Breite des Anhängers 19 gewählten Abmessungen, die aktuelle Position 20 des Kraftfahrzeugs 1 mit dem Anhänger 19 relativ zur Referenzzielposition 14 bestimmt.

Dabei wird nun bei dem automatisierten Parken abhängig von der aktuellen Position 20 und der vorgegebenen Abmessungen I, b des Anhängers 19 sowie vorliegend zusätzlich von einer vorgegebenen Kinematik des Anhängers 19 ein Fahrschlauch 18', 18" für das automatisierte Einparken festgelegt. Durch die Kinematik wird dabei das Verhalten des Anhängers 19 in Kurven beschrieben. Dies hängt vor allem von der relativen Anordnung einer Radachse des Anhängers 19 entlang der Länge I des Anhängers 19 ab. Der Fahrschlauch 18', 18" verbindet hier die aktuelle Position 20 mit der Referenzzielposition 14. Bei dem automatisierten Einparken wird dann entsprechend das Kraftfahrzeug 1 mit dem Anhänger 19 innerhalb des Fahrschlauchs 18', 18" in die Parklücke 15 automatisiert eingeparkt, wobei hier eine vorgebbare, insbesondere seitliche, Toleranzabweichung berücksichtigt wird oder berücksichtigt werden kann.

Im gezeigten Beispiel werden bei dem Festlegen des Fahrschlauchs 18', 18" unterschiedliche Trajektorien 17, 17" bewertet. So wird vorliegend ausgehend von der aktuellen Position 20 eine erste weitere Trajektorie 17', welche frühzeitig mit der aus dem manuellen Einparken bekannten Trajektorie 17 zusammenfällt, bewertet. Diese Trajektorie 17' würde jedoch vorliegend dazu führen, dass der Anhänger 19 mit dem Objekt 16b, hier der einen Mauer der Garage, kollidiert. Dies folgt daraus, dass der zugehörige erste weitere Fahrschlauch 18' mindestens die Breite b des Anhängers 19 oder eine Breite des Kraftfahrzeugs 1 aufweisen muss, damit das Kraftfahrzeug 1 mit dem Anhänger 19 innerhalb des Fahrschlauchs 18' in die Parklücke 15 einparken kann. Zusätzlich ist hier je nach Krümmungsradius der Trajektorie 17' und der Kinematik des Anhängers 19 aufgrund eines Ausscherens des Anhängers 19 gegebenenfalls auch eine größere Breite für den Fahrschlauch 18' vorzusehen. Überdies kann für den Fahrschlauch 18' noch eine vorgebbare Toleranzabweichung berücksichtigt werden, um beispielsweise einen gewissen Mindestabstand zu Hindernissen wie den Objekten 16a, 16b, 16c, 16d einzuhalten. Dies kann beispielsweise praktisch sein, um dein Ein-und/oder Aussteigen in den Anhänger 19 - vorliegend über eine Tür 21 des Anhängers 19 - oder ein Beladen des Anhängers 19 oder dergleichen zu erleichtern.

Da im gezeigten Beispiel die erste weitere Trajektorie 17' somit nicht für ein Erreichen der Referenzzielposition 14 durch das Kraftfahrzeug 1 mit dem angehängten Anhänger 19 geeignet ist, wird im gezeigten Beispiel eine zweite weitere Trajektorie 17" bewertet. Diese weicht von der ursprünglichen Trajektorie 17 des manuellen Einparkens stärker ab als die erste weitere Trajektorie 17'. Der zugehörige Fahrschlauch 18" führt jedoch im gezeigten Beispiel nicht zu einer Kollision mit Objekten 16a, 16b, 16c, 16d der Umgebung der Parklücke 15 und kann somit für das automatisierte Parken genutzt werden. Entsprechend wird somit durch ein automatisches Einparken mit einem Entlangfahren innerhalb des Fahrschlauchs 18" die Parklücke 15 erreicht. Damit wird also im gezeigten Beispiel der Fahrschlauch 18" als Fahrschlauch festgelegt. Da vorliegend auch eine entsprechende Toleranzabweichung vorgegeben ist, welche hier von Null verschieden ist und an einen gewünschten Mindestabstand 22 der Tür 21 des Anhängers 19 von einem Objekt angepasst ist, ist nunmehr auch der Anhänger 19 in der Parklücke 15 vorliegend auch über die Tür 21 nutzbar.

In dem hier gezeigten Beispiel wird somit ein einzügiges automatisiertes Einparken in die Parklücke 15 realisiert.

Fig. 4 zeigt ein weiteres beispielhaftes Szenario für ein automatisiertes Einparken, welches dem in Fig. 2 gezeigten Szenario entspricht, aus einer Vogelperspektive. Gezeigt ist vorliegend erneut das Kraftfahrzeug 1 mit dem angehängten Anhänger 19 in einer aktuellen Position 20. Da für den besseren Vergleich wieder auch die ursprüngliche Trajektorie 17 des manuellen Einparkens eingezeichnet ist, ist hier erkennbar, dass die aktuelle Position 20 im gezeigten Beispiel wie auch bereits in Fig. 3 deutlich von der Startposition 13 (Fig. 2) verschieden ist. Im gezeigten Beispiel befindet sich die aktuelle Position 20 deutlich näher an dem Objekt 16b. Das hat im gezeigten Beispiel zur Folge, dass es keinen Fahrschlauch 18', 18" (Fig. 3) gibt, welcher ein einzügiges Parken in die Parklücke 15 ermöglicht. Dies kann beispielsweise einen durch die Kinematik des Anhängers 19 und des Kraftfahrzeugs 1 vorgegebenen Höchstwert für minimalen Krümmungsradius für einen durch das Kraftfahrzeug 1 mit dem Anhänger 19 befahrbaren Fahrschlauch bedingt sein.

Entsprechend weist vorliegend der festgelegte Fahrschlauch 18' einen spitzwinkligen Knick 23 auf, da vorliegend ein zweizügiges automatisiertes Einparken erforderlich ist. Im gezeigten Beispiel bewegt sich folglich das Kraftfahrzeug 1 mit dem angehängten Anhänger 19 zunächst vorwärts, also beispielsweise in Vorwärtsgang, und von dem Parkplatz 15 zumindest zeitweise fort, um sodann rückwärts, also beispielsweise in einem Rückwärtsgang, in die Parklücke 15 einzufahren. Wieder ist hier im gezeigten Beispiel ein Toleranzwert für den weiteren Fahrschlauch 18 an einen erwünschten Abstand 22 von einem Objekt 16a, hier einer anderen Mauer der Garage, vorgegeben und wird entsprechend eingehalten.

Gefunden werden kann solch ein Fahrschlauch beziehungsweise die entsprechende Trajektorie zum Beispiel indem durch die Fahrerassistenzeinrichtung 2, beispielsweise durch eine Steuereinrichtung der Fahrerassistenzeinrichtung 2 (Fig. 1), eine Vielzahl von möglichen Trajektorien und Fahrschläuchen, welche von der aktuellen Position 20 ausgehen und welche sich in einer jeweiligen Krümmung unterscheiden, probeweise mit einer Vielzahl von Trajektorien oder Fahrschläuchen, welche von der Referenzzielposition 14 ausgehen und welche sich ebenfalls in einer jeweiligen Krümmung unterscheiden, kombiniert werden. Beispielsweise können jeweilige Trajektorien beziehungsweise Fahrschläuche, welche sich tangential schneiden und in welchen sich keine Objekte 16a, 16b, 16c, 16d der Umgebung 12 befinden, für das automatisierte Einparken genutzt werden.

Damit wird ein automatisiertes zweizügiges Einparken realisiert. Dies ist insofern besonders vorteilhaft, da das manuelle Einparken nur einzügig erfolgen muss. Gerade das vor allem mit einem Anhänger aufwendige zweizügige Einparken, was sich in der Realität aufgrund der schwierigen Steuerbarkeit oft ungewollt zu einem vielzügigen Einparken entwickelt, kann dem Fahrer so erspart bleiben. Damit wird das Einparken für den Fahrer vereinfacht.

## Patentansprüche

1. Verfahren für ein automatisiertes Einparken eines Kraftfahrzeugs (1) mit einem Anhänger (19) in eine Parklücke (15) mit Hilfe einer Fahrerassistenzeinrichtung (2) des Kraftfahrzeugs (1), mit einem
a) manuellen Einparken des Kraftfahrzeugs (1) in die Parklücke (15) durch einen Fahrer des Kraftfahrzeugs (1) bei einem aktivierten Lernmodus der Fahrerassistenzeinrichtung (2), wobei in dem Lernmodus während des Einparkens
a1) durch eine Sensoreinrichtung (3) der Fahrerassistenzeinrichtung (2) Referenzdaten über einen Umgebungsbereich (12) der Parklücke (15) erfasst und abgespeichert werden und
a2) durch die Fahrerassistenzeinrichtung (2) eine Referenzzielposition (14), in welcher das Kraftfahrzeug (1) in der Parklücke (15) geparkt wird, erfasst und abgespeichert wird;
wobei bei einem nachfolgenden
b) automatisierten Einparken des Kraftfahrzeugs (1) mit dem angehängten Anhänger (19) in diese Parklücke (15) mit Hilfe der Fahrerassistenzeinrichtung (2) in einem von dem Lernmodus verschiedenen Betriebsmodus der Fahrerassistenzeinrichtung (2) die abgespeicherten Referenzdaten und die Referenzzielposition (14) berücksichtigt werden,
wobei das manuelle Einparken gemäß Schritt a) vorwärts und das automatisierte Einparken gemäß Schritt b) rückwärts erfolgt.

2. Verfahren nach Anspruch 1,
**dadurch gekennzeichnet, dass**
bei dem automatisierten Einparken gemäß Schritt b) in dem Betriebsmodus
b1) Sensordaten über den Umgebungsbereich (12) der Parklücke (15) erfasst und mit den Referenzdaten verglichen werden,
b2) durch das Vergleichen aus den erfassten Sensordaten in Abhängigkeit von zumindest einer vorgegebenen Abmessung (I, b) des Anhängers (19) eine aktuelle Position (20) des Kraftfahrzeugs (1) mit dem Anhänger (19) relativ zu der Referenzzielposition (14) bestimmt wird und
b3) abhängig von der aktuellen Position (20) und der vorgegebenen Abmessung (I, b) des Anhängers (19) und/oder einer vorgegebenen Kinematik des Anhängers (19) ein Fahrschlauch (18', 18") für das automatisierte Einparken festgelegt wird, welcher die aktuelle Position (20) mit der Referenzzielposition (14) verbindet, um das Kraftfahrzeug (1) mit dem Anhänger (19) innerhalb des Fahrschlauchs (18', 18") in die Parklücke (15) einzuparken, insbesondere mit einer vorgebbaren Toleranzabweichung automatisiert einzuparken.

3. Verfahren nach Anspruch 1 oder 2,
**dadurch gekennzeichnet, dass**
bei dem manuellen Einparken gemäß Schritt a) das Kraftfahrzeug (1) ohne den Anhänger (19) eingeparkt wird.

4. Verfahren nach Anspruch 1 oder 2,
**dadurch gekennzeichnet, dass**
bei dem manuellen Einparken gemäß Schritt a) das Kraftfahrzeug (1) mit dem Anhänger (19) eingeparkt wird.

5. Verfahren nach einem der Ansprüche 2 bis 4,
**dadurch gekennzeichnet, dass**
die zumindest eine vorgegebene Abmessung (I, b) und/oder die vorgegebene Kinematik eine vorab in der Fahrerassistenzeinrichtung (2) abgespeicherte Abmessung (I, b) und/oder Kinematik ist, welche insbesondere durch den Fahrer aus mehreren abgespeicherten Abmessungen (I, b) und/oder Kinematiken ausgewählt wird.

6. Verfahren nach einem der Ansprüche 2 bis 5,
**dadurch gekennzeichnet, dass**
die zumindest eine vorgegebene Abmessung (I, b) und/oder die vorgegebene Kinematik während eines Fahrvorgangs des Kraftfahrzeugs (1) mit dem Anhänger (19) oder während des Einparkens des Kraftfahrzeugs (1) mit dem Anhänger (19) iterativ über ein Messen von unterschiedlichen Lenkwinkeleinschlägen des Kraftfahrzeugs (1) und von jeweils zugehörigen Winkelveränderungen des Anhängers (19) relativ zu dem Kraftfahrzeug (1) bestimmt wird.

7. Verfahren nach einem der vorhergehenden Ansprüche,
**dadurch gekennzeichnet, dass**
das manuelle Einparken gemäß Schritt a) mehrfach erfolgt und die jeweils erfassten Referenzdaten genutzt werden, um die bereits gespeicherten Referenzdaten zu erweitern und/oder zu überprüfen.

8. Verfahren nach einem der vorhergehenden Ansprüche,
**dadurch gekennzeichnet, dass**
in dem Betriebsmodus eine Warnung an den Fahrer ausgegeben wird, falls das Kraftfahrzeug (1) mit dem Anhänger (19) nicht in die Parklücke (15) passt und/oder falls der Fahrschlauch (18', 18") nicht derart festgelegt werden kann, dass das Kraftfahrzeug (1) mit dem Anhänger (19) innerhalb des Fahrschlauchs (18', 18") mit der vorgebbaren Toleranzabweichung automatisiert in die Parklücke (15) eingeparkt werden kann.

9. Verfahren nach einem der Ansprüche 2 bis 8,
**dadurch gekennzeichnet, dass**
in dem Betriebsmodus der Fahrschlauch (18', 18") mit einem spitzwinkligen Knick (23) festgelegt wird, so dass er einen Fahrtrichtungswechsel in einer Längsrichtung (L) des Kraftfahrzeugs (1) bedingt.

10. Verfahren nach einem der Ansprüche 2 bis 9,
**dadurch gekennzeichnet, dass**
im Betriebsmodus ein Hinweis an den Fahrer ausgegeben wird, falls der Fahrschlauchs (18', 18") durch einen Umgebungsbereich verläuft, über welchen keine oder unzureichende Referenzdaten erfasst und abgespeichert wurden, wobei insbesondere der Hinweis eine Aufforderung zum nochmaligen manuellen Einparken bei aktiviertem Lernmodus umfasst.

11. Verfahren nach einem der vorhergehenden Ansprüche,
**dadurch gekennzeichnet, dass**
der Anhänger (19) eine weitere Sensoreinrichtung aufweist, welche mit der Fahrerassistenzeinrichtung (2) des Kraftfahrzeugs (1) gekoppelt wird und an die Fahrerassistenzeinrichtung (2) im Lernmodus Referenzdaten und/oder im Betriebsmodus Sensordaten bereitstellt.

12. Verfahren nach einem der vorhergehenden Ansprüche,
**dadurch gekennzeichnet, dass**
bei dem automatisierten Einparken gemäß Schritt b) die Fahrerassistenzeinrichtung (2) selbsttätig eine Bewegung des Kraftfahrzeugs (1) in einer Querrichtung (Q) des Kraftfahrzeugs (1) steuert.

13. Verfahren nach einem der vorhergehenden Ansprüche,
**dadurch gekennzeichnet, dass**
bei dem automatisierten Einparken gemäß Schritt b) die Fahrerassistenzeinrichtung (2) selbsttätig eine Bewegung des Kraftfahrzeugs (1) in einer Längsrichtung (L) des Kraftfahrzeugs (1) steuert.

14. Fahrerassistenzeinrichtung (2) für ein Kraftfahrzeug, welche für ein automatisiertes Einparken eines Kraftfahrzeugs (1) mit einem Anhänger (19) in eine Parklücke (15) mit Hilfe der Fahrerassistenzeinrichtung (2) ausgelegt ist, und dabei ausgelegt ist, bei einem
a) manuellen Einparken des Kraftfahrzeugs (1) in die Parklücke (15) durch einen Fahrer des Kraftfahrzeugs (1) in einem aktivierten Lernmodus während des Einparkens
a1) durch eine Sensoreinrichtung (3) der Fahrerassistenzeinrichtung (2) Referenzdaten über einen Umgebungsbereich (12) der Parklücke (15) zu erfassen und abzuspeichern und
a2) eine Referenzzielposition (14), in welcher das Kraftfahrzeug (1) in der Parklücke (15) geparkt wird, zu erfassen und abzuspeichern;
und wobei bei einem nachfolgenden
b) automatisierten Einparken des Kraftfahrzeugs (1) mit dem angehängten Anhänger (19) in diese Parklücke (15) mit Hilfe der Fahrerassistenzeinrichtung (2) in einem von dem Lernmodus verschiedenen Betriebsmodus die abgespeicherten Referenzdaten und die Referenzzielposition (14) zu berücksichtigen, wobei die Fahrerassistenzeinrichtung (2) weiter ausgelegt ist, dass das manuelle Einparken gemäß a) vorwärts und das automatisierte Einparken gemäß b) rückwärts erfolgen.

15. Kraftfahrzeug (1) mit einer Fahrerassistenzeinrichtung (2) nach Anspruch 14.

## Claims

1. Method for automated parking of a motor vehicle (1) with a trailer (19) into a parking space (15) using a driver assistance device (2) of the motor vehicle (1), with
a) manual parking of the motor vehicle (1) into the parking space (15) by a driver of a motor vehicle (1) with an activated learning mode of the driver assistance device (2), wherein in the learning mode during the parking
a1) reference data about a surrounding area (12) of the parking space (15) is acquired by a sensor device (3) of the driver assistance device (2) and stored, and
a2) a reference target position (14) in which the motor vehicle (1) is parked in the parking space (15) sensed by the driver assistance device (2) and stored;
wherein during subsequent
b) automated parking of the motor vehicle (1) with the coupled trailer (19) into this parking space (15) using the driver assistance device (2) the stored reference data and the reference target position (14) are taken into account in an operating mode of the driver assistance device (2) which is different from the learning mode,
wherein the manual parking according to step a) takes place forwards, and the automated parking according to step b) takes place rearwards.

2. Method according to Claim 1,
**characterized in that**
during the automated parking according to step b) in the operating mode
b1) sensor data about the surrounding area (12) of the parking space (15) are acquired and compared with the reference data,
b2) by means of the comparison a current position (20) of the motor vehicle (1) with the trailer (19) relative to the reference target position (14) is determined from the acquired sensor data in accordance with at least one predefined dimension (1, b) of the trailer (19), and
b3) a driving tube (18', 18") for the automated parking is defined on the basis of the current position (20) and the predefined dimension (1, b) of the trailer (19) and/or predefined kinematics of the trailer (19), which driving tube (18', 18") connects the current position (20) to the reference target position (14) in order to park the motor vehicle (1) with the trailer (19) in the parking space (15) within the driving tube (18', 18"), in particular to park it in an automated fashion with a predefinable tolerance deviation.

3. Method according to Claim 1 or 2,
**characterized in that**
during the manual parking according to step a) the motor vehicle (1) is parked without the trailer (19) .

4. Method according to Claim 1 or 2,
**characterized in that**
during the manual parking according to step a) the motor vehicle (1) is parked with the trailer (19).

5. Method according to one of Claims 2 to 4,
**characterized in that**
the at least one predefinable dimension (1, b) and/or the predefined kinematics are a dimension (1, b) and/or kinematics which have been previously stored in the driver assistance device (2) and which are selected, in particular, by the driver from a plurality of stored dimensions (1, b) and/or kinematics.

6. Method according to one of Claims 2 to 5,
**characterized in that**
the at least one predefined dimension (1, b) and/or the predefined kinematics are determined during a driving process of the motor vehicle (1) with the trailer (19) or during the parking of the motor vehicle (1) with the trailer (19) in an iterative fashion by measuring different steering angle lock values of the motor vehicle (1) and respectively associated changes in angle of the trailer (19) relative to the motor vehicle (1).

7. Method according to one of the preceding claims,
**characterized in that**
the manual parking according to step a) takes place repeatedly and the respectively acquired reference data are used to extend and/or check the reference data which have already been stored.

8. Method according to one of the preceding claims,
**characterized in that**
in the operating mode a warning is issued to the driver if the motor vehicle (1) with the trailer (19) does not fit into the parking space (15) and/or if the driving tube (18', 18") cannot be defined in such a way that the motor vehicle (1) with the trailer (19) can be parked inside the driving tube (18', 18") in an automated fashion into the parking space (15) with the definable tolerance deviation.

9. Method according to one of Claims 2 to 8,
**characterized in that**
in the operating mode the driving tube (18', 18") is defined with an acutely angled bend (23) so that it brings about a change in the direction of travel in a longitudinal direction (L) of the motor vehicle (1) .

10. Method according to one of Claims 2 to 9,
**characterized in that**
in the operating mode a message is issued to the driver if the driving tube (18', 18") runs through a surrounding area about which no reference data or insufficient reference data have been acquired and stored, wherein, in particular, the message comprises a request to manually park once more when the learning mode is activated.

11. Method according to one of the preceding claims,
**characterized in that**
the trailer (19) has a further sensor device which is coupled to the driver assistance device (2) of the motor vehicle (1) and in the learning mode makes available reference data to the driver assistance device (2), and/or in the operating mode makes available sensor data to said driver assistance device (2).

12. Method according to one of the preceding claims,
**characterized in that**
during the automated parking according to step b) the driver assistance device (2) automatically controls a movement of the motor vehicle (1) in a transverse direction (Q) of the motor vehicle (1).

13. Method according to one of the preceding claims,
**characterized in that**
during the automated parking according to step b) the driver assistance device (2) automatically controls a movement of the motor vehicle (1) in a longitudinal direction (L) of the motor vehicle (1).

14. Driver assistance device (2) for a motor vehicle which is configured to automatically park a motor vehicle (1) with a trailer (19) into a parking space (15) using the driver assistance device (2), and is configured in this context to acquire during
a) manual parking of the motor vehicle (1) into the parking space (15) by a driver of the motor vehicle (1) in an activated learning mode during the parking process,
a1) reference data about a surrounding area (12) of the parking space (15) by means of a sensor device (3) of the driver assistance device (2), and to store said data, and to acquire
a2) a reference target position (14) in which the motor vehicle (1) is parked in the parking space (15) and to store said position;
and wherein during subsequent
b) automated parking of the motor vehicle (1) with the coupled trailer (19) into this parking space (15), using the driver assistance device (2), to take into account the stored reference data and the reference target position (14) in an operating mode which is different from the learning mode, wherein the driver assistance device (2) is also configured in such a way that the manual parking according to a) takes place forwards and the automated parking according to b) takes place rearwards.

15. Motor vehicle (1) with a driver assistance device (2) according to Claim 14.

## Revendications

1. Procédé pour une mise en stationnement automatisée d'un véhicule automobile (1) tractant une remorque (19) sur une place de stationnement (15) à l'aide d'un système d'assistance au conducteur (2) du véhicule automobile (1), comprenant
a) une mise en stationnement manuelle du véhicule automobile (1) sur la place de stationnement (15) par un conducteur du véhicule automobile (1) dans un mode d'apprentissage activé du système d'assistance au conducteur (2), dans lequel, dans le mode d'apprentissage pendant la mise en stationnement,
a1) un dispositif capteur (3) du système d'assistance au conducteur (2) détecte et enregistre des données de référence concernant une zone environnante (12) de la place de stationnement (15), et
a2) le système d'assistance au conducteur (2) détecte et enregistre une position cible de référence (14) à laquelle le véhicule automobile (1) est mis en stationnement sur la place de stationnement (15) ;
dans lequel ensuite,
b) au cours d'une mise en stationnement automatisée du véhicule automobile (1) tractant la remorque (19) sur cette place de stationnement (15) à l'aide du système d'assistance au conducteur (2), dans un mode opérationnel différent du mode d'apprentissage du système d'assistance au conducteur (2), les données de référence enregistrées et la position cible de référence (14) sont prises en compte,
la mise en stationnement manuelle selon l'étape a) étant effectuée en marche avant et la mise en stationnement automatisée selon l'étape b) étant effectuée en marche arrière.

2. Procédé selon la revendication 1, **caractérisé en ce que**
lors de la mise en stationnement automatisée selon l'étape b) dans le mode opérationnel
b1) des données de capteur sont détectées concernant la zone environnante (12) de la place de stationnement (15) et comparées aux données de référence,
b2) la comparaison permet de déterminer une position actuelle (20) du véhicule automobile (1) tractant la remorque (19) par rapport à la position cible de référence (14) à partir des données de capteur détectées en fonction d'au moins une dimension (l, b) prédéfinie de la remorque (19), et
b3) en fonction de la position actuelle (20) et de la dimension prédéfinie (l, b) de la remorque (19) et/ou d'une cinématique prédéfinie de la remorque (19), un couloir de conduite (18', 18") est établi pour la mise en stationnement automatisée qui relie la position actuelle (20) à la position cible de référence (14) pour la mise en stationnement automatisée du véhicule automobile (1) tractant la remorque (19) sur la place de stationnement (15) à l'intérieur du couloir de conduite (18', 18"), en particulier avec un écart de tolérance prédéfinissable.

3. Procédé selon la revendication 1 ou 2, **caractérisé en ce que** lors d'une mise en stationnement manuelle selon l'étape a), le véhicule automobile (1) est mis en stationnement sans tracter la remorque (19).

4. Procédé selon la revendication 1 ou 2, **caractérisé en ce que** lors d'une mise en stationnement manuelle selon l'étape a), le véhicule automobile (1) est mis en stationnement en tractant la remorque (19).

5. Procédé selon l'une quelconque des revendications 2 à 4, **caractérisé en ce que** ladite au moins une dimension prédéfinie (l, b) et/ou la cinématique prédéfinie est une dimension (l, b) et/ou une cinématique enregistrée préalablement dans le système d'assistance au conducteur (2) et qui est sélectionnée en particulier par le conducteur parmi plusieurs dimensions (l, b) et/ou cinématiques enregistrées.

6. Procédé selon l'une quelconque des revendications 2 à 5, **caractérisé en ce que** ladite au moine une dimension prédéfinie (l, b) et/ou la cinématique prédéfinie sont déterminées de manière itérative pendant une opération de conduite du véhicule automobile (1) tractant la remorque (19) ou pendant la mise en stationnement du véhicule automobile (1) tractant la remorque (19) en mesurant différents angles de braquage du véhicule automobile (1) et des changements d'angle respectivement associés de la remorque (19) par rapport au véhicule automobile (1) .

7. Procédé selon l'une quelconque des revendications précédentes, **caractérisé en ce que** la mise en stationnement manuelle selon l'étape a) est effectuée à plusieurs reprises et les données de référence détectées respectivement sont exploitées pour faire évoluer et/ou pour vérifier les données de référence déjà enregistrées.

8. Procédé selon l'une quelconque des revendications précédentes, **caractérisé en ce que** dans le mode opérationnel, un avertissement est adressé au conducteur si le véhicule automobile (1) tractant la remorque (19) ne rentre pas dans la place de stationnement (15) et/ou si le couloir de conduite (18', 18") ne peut pas être établi de telle sorte que le véhicule automobile (1) tractant la remorque (19) peut être mis en stationnement de manière automatisée sur la place de stationnement (15) à l'intérieur du couloir de conduite (18', 18") avec l'écart de tolérance prédéfinissable.

9. Procédé selon l'une quelconque des revendications 2 à 8, **caractérisé en ce que** dans le mode opérationnel, le couloir de conduite (18', 18") est établi avec un coude à angle aigu (23) de sorte qu'il implique un changement de sens de la marche dans une direction longitudinale (L) du véhicule automobile (1).

10. Procédé selon l'une quelconque des revendications 2 à 9, **caractérisé en ce que** dans le mode opérationnel, une indication est adressée au conducteur si le couloir de conduite (18', 18") passe par une zone environnante sur laquelle aucune donnée de référence ou des données de référence insuffisantes ont été détectées et enregistrées, l'indication comprenant en particulier une demande de procéder à une nouvelle mise en stationnement manuelle en mode d'apprentissage activé.

11. Procédé selon l'une quelconque des revendications précédentes, **caractérisé en ce que** la remorque (19) présente un dispositif capteur supplémentaire qui est couplé au système d'assistance au conducteur (2) du véhicule automobile (1) et fournit au système d'assistance au conducteur (2) des données de référence dans le mode d'apprentissage et/ou des données de capteur dans le mode opérationnel.

12. Procédé selon l'une quelconque des revendications précédentes, **caractérisé en ce que** lors de la mise en stationnement automatisée selon l'étape b), le système d'assistance au conducteur (2) commande de manière autonome un déplacement du véhicule automobile (1) dans une direction transversale (Q) du véhicule automobile (1) en particulier.

13. Procédé selon l'une quelconque des revendications précédentes, **caractérisé en ce que** lors de la mise en stationnement automatisée selon l'étape b), le système d'assistance au conducteur (2) commande de manière autonome un déplacement du véhicule automobile (1) dans une direction longitudinale (L) du véhicule automobile (1) .

14. Système d'assistance au conducteur (2) pour un véhicule automobile, conçu pour une mise en stationnement automatisée d'un véhicule automobile (1) tractant une remorque (19) sur une place de stationnement (15) à l'aide du système d'assistance au conducteur (2), et qui est alors conçu
a) lors d'une mise en stationnement manuelle du véhicule automobile (1) sur la place de stationnement (15) par un conducteur du véhicule automobile (1) dans un mode d'apprentissage activé pendant la mise en stationnement,
a1) pour détecter par un dispositif capteur (3) du système d'assistance au conducteur (2) des données de référence concernant une zone environnante (12) de la place de stationnement (15) et pour les enregistrer, et
a2) pour détecter et enregistrer une position cible de référence (14) à laquelle le véhicule automobile (1) est mis en stationnement sur la place de stationnement (15) ;
et ensuite,
b) lors d'une mise en stationnement automatisée du véhicule automobile (1) tractant la remorque (19) sur cette place de stationnement (15) à l'aide du système d'assistance au conducteur (2) dans un mode opérationnel différent du mode d'apprentissage, pour tenir compte des données de référence enregistrées et de la position cible de référence (14), le système d'assistance au conducteur (2) étant en outre conçu de telle sorte que la mise en stationnement manuelle est effectuée selon a) en marche avant et que la mise en stationnement automatisée est effectuée selon b) en marche arrière.

15. Véhicule automobile (1) équipé d'un dispositif d'assistance au conducteur (2) selon la revendication 14.
